# EUROPÄISCHE PATENTANMELDUNG

(11) **EP 2 333 768 A2**
(43) Veröffentlichungstag der Anmeldung: **15.06.2011**
(21) Anmeldenummer: 10186797.6
(22) Anmeldetag: 07.10.2010
(51) Int. Cl.: G10L 15/22, G10L 17/00

(54) **Vorrichtung, System und Verfahren zur Sprachdialogaktivierung und/oder -führung**

(30) Priorität: 30.10.2009 DE 102009051508
(71) Anmelder: Continental Automotive GmbH, 30165 Hannover (DE)
(72) Erfinder: Hoepken, Harro, 35606, Solms (DE); Knobl, Karl-Heinz, 35469, Allendorf (DE); Kämpf, David, 35043, Marburg/Lahn (DE); Ruehl, Hans-Wilhelm, 35606, Solms (DE)

(57) **Zusammenfassung**

Die vorliegende Erfindung betrifft eine Vorrichtung, ein System und ein Verfahren zur Sprachdialogaktivierung und/oder - führung. Die Erfindungsgemäße Vorrichtung zur Sprachdialogaktivierung und/oder -führung weist eine Spracherkennungseinheit, eine Sprechererkennungseinheit sowie eine Entscheidereinheit auf. Die Entscheidereinheit ist dazu ausgebildet eine Ergebnisaktion abhängig von Ergebnissen der Sprach- und Sprechererkennungseinheit zu aktivieren.

## Beschreibung

Die Erfindung betrifft eine Vorrichtung, ein System und ein Verfahren zur Sprachdialogaktivierung und/oder Sprachdialogführung.

Sprachdialogsysteme dienen dazu elektronische Geräte, wie beispielsweise Fahrzeugcomputer, ohne die Notwendigkeit einer haptischen Bedienoperation zu steuern. Nach dem Stand der Technik ist es bekannt, dass Vorrichtungen zur Sprachdialogführung oder zur Sprachdialogaktivierung ein durch eine Rauschunterdrückung oder Echokompensation bereinigtes Sprachsignal nach Befehlswörtern durchsuchen. Im Falle einer Vorrichtung zur Sprachdialogaktivierung wird nach einem bestimmten Schlüsselwort gesucht, welches zum Aktivieren des Sprachdialogs dient. Bei Vorrichtungen zur Sprachdialogführung wird das Sprachsignal daraufhin untersucht, ob es Wörter enthält, die als Befehlswörter in einer im Sprachdialogsystem integrierten Befehlsdatenbank gespeichert sind. Wird ein Befehlswort erkannt wird eine zu dem Befehl gehörige Aktion ausgeführt.

Insbesondere unter Einsatzbedingungen, in denen Störgeräusche auf das System einwirken, sind derartige Vorrichtungen zur Sprachdialogführung oder Sprachdialogaktivierung unzuverlässig. Dies ist insbesondere bei einer Anwendung in PKWs nachteilhaft, denn Vorrichtungen nach dem Stand der Technik führen bei Störeinflüssen, wie Gesprächen von Mitfahrern, oft unerwünscht Funktionen aufgrund von fehlerhaft erkannten Befehlen aus.

Die der Erfindung zugrunde liegende Aufgabe besteht somit darin, eine besonders störunempfindliche Sprachdialogführung und/oder Sprachdialogaktivierung zu ermöglichen.

Diese Aufgabe wird durch eine Vorrichtung nach Anspruch 1, und einem Verfahren nach Anspruch 19 gelöst. Vorteilhafte Weiterbildungen werden in den abhängigen Ansprüchen genannt.

Dadurch, dass die Vorrichtung nicht nur eine Spracherkennungseinheit zur Feststellung ob ein Befehlswort im Sprachsignal enthalten ist und eine Entscheidereinheit zum Erzeugen eines Ausgabesignals abhängig von einem im Sprachsignal erkannten Befehlswort, sondern auch eine Sprechererkennungseinheit zur Erkennung eines Sprechers anhand des Sprachsignals und mindestens eines gespeicherten Sprecherprofils umfasst, wobei die Entscheidereinheit derart ausgebildet ist, dass eine Durchführung einer von dem Befehlswort abhängigen Ergebnisaktion davon abhängt, ob ein Sprecher, der das Sprachsignal zumindest teilweise erzeugt hat, von der Sprechererkennungseinheit als dem gespeicherten Sprecherprofil entsprechender Sprecher erkannt wurde, wird die Zuverlässigkeit einer Befehlsauswertung signifikant erhöht.

Unter Spracherkennungseinheit ist eine Einheit zu verstehen, die zur Identifizierung von Befehlsworten und/oder Befehlswortstrukturen aus einem Sprachsignal ausgebildet ist. D.h. anhand eines Sprachmodells und anhand von gespeicherten Befehlsworten wird bewertet ob/welche Befehlsworte bzw. Befehlswortstrukturen in einem Sprachsignal enthalten sind. Ist ein Befehlswort enthalten wird es als das entsprechende gültige Befehlswort erkannt.

In diesem Zusammenhang wird unter einem Befehlswort nicht zwangsläufig nur ein einzelnes Wort verstanden. Vielmehr sind hiermit jegliche Formen von Spracheingaben gemeint. Beispielsweise sind mit dem Begriff "Befehlswort" auch Zahlen-/Nummernfolgen, Satzteile und/oder komplette Sätze gemeint.

Unter einer Sprechererkennungseinheit ist eine Einheit zu verstehen, die insbesondere zum Extrahieren von Sprechermerkmalen aus dem Sprachsignal und zum Vergleichen der Sprechermerkmale mit zuvor in mindestens einem Sprecherprofil gespeicherten sprecherabhängigen Merkmalen ausgebildet sein kann, wobei anhand des Vergleichs eine Übereinstimmung des aktuellen Sprechers mit einem dem Sprecherprofil zugeordneten Sprecher festgestellt oder nicht festgestellt wird. Vorteilhaft ist die Sprechererkennungseinheit derart ausgebildet, dass nur dann eine Übereinstimmung festgestellt wird, wenn das Sprachsignal vollständig von einem dem Sprecherprofil zugeordneten Sprecher stammt, d.h. sprechen mehrere Personen gleichzeitig wird das Signal vorteilhaft keinem Sprecher zugeordnet.

Bei der durchzuführenden Ergebnisaktion kann es sich um verschiedenste Arten von Ergebnisaktionen handeln.

Bei Vorrichtungen zur Sprachdialogaktivierung kann die Ergebnisaktion beispielsweise eine Ausgabe eines binären Ereignisses sein, was als Information lediglich die Entscheidung ob eine Aktivierung eines Sprachdialoges durchgeführt werden soll oder nicht, beinhaltet. Alternativ kann das Ereignis Informationen über den Sprecher der die Aktivierung veranlasst enthalten, sodass ein sprecherabhängiges Aktivierungssignal erzeugt wird.

Bei Vorrichtungen zur Sprachdialogführung sind insbesondere Sprachausgaben als Ergebnisaktionen bedeutsam. Mit diesem können dem Sprecher Informationen, beispielsweise weitere Auswahloptionen, mitgeteilt werden. Möchte der Sprecher beispielsweise Informationen über in der Nähe befindliche Restaurants abrufen und verwendet ein dem entsprechendes Befehlswort, könnte das Sprachdialogsystem den Sprecher auffordern aus einer Menge von möglichen Restaurantarten zu wählen.

Weitere mögliche Ergebnisaktionen sind Steuerereignisse, die Funktionen des Fahrzeugs steuern. Beispielsweise könnte an ein Steuersystem für eine Sitzbeheizung ein Ereignis zum Erhöhen einer Heiztemperatur gesendet werden. Außerdem können Steuersignale zum Abruf von Informationen von weiteren im Fahrzeug befindlichen Systemen ausgegeben werden. Außerdem ist es möglich, dass sich die Ergebnisaktion aus Steuerereignissen und einer Sprachausgabe zusammensetzt. Weitere mögliche Ausgabesignale sind dem Fachmann aus Vorrichtungen zur Sprachdialogführung nach dem Stand der Technik bekannt.

Des Weiteren betrifft die Erfindung ein Verfahren, bei dem zunächst ein Sprachsignal aufgenommen wird, wobei nachfolgend ein im Sprachsignal vorhandenes Befehlswort bzw. eine vorhanden Befehlsstruktur erkannt wird und wobei ein Sprecher anhand des Sprachsignals und mindestens eines Sprecherprofils erkannt wird, wobei der Erkennung eines Befehlswortes und eines Sprechers nachfolgend eine Ergebnisaktion abhängig von einem Ergebnis der Erkennung von Sprecher und Befehlswort durchgeführt wird.

Vorteilhaft ist die Entscheidereinheit derart ausgebildet, dass nur dann eine vom Befehlswort abhängige Ergebnisaktion durchgeführt wird, wenn das ein Befehlswort enthaltende Sprachsignal von der Sprechererkennungseinheit als von einem autorisierten Sprecher stammend identifiziert wird. D.h. die Ergebnisse der Sprechererkennungseinheit und der Spracherkennungseinheit werden mit in einem Benutzerprofil gespeicherten Daten verglichen und eine Autorisierung des Sprechers wird überprüft.

Je nach Ausführungsform kann eine Rückmeldung über eine mangelnde Autorisierung erfolgen. Eine solche hat den Vorteil, dass der Sprecher unterscheiden kann zwischen einer Nichterkennung oder einer Erkennung als nicht hinreichend autorisierter Sprecher.

Wesentlich ist, dass durch Eingabe eines Befehlswortes durch einen unberechtigten Sprecher nicht die dem Befehlswort zugeordnete durchzuführende Ergebnisaktion ausgelöst wird, d.h. ein Befehlswort von einem unberechtigten Sprecher führt zu keiner oder zu einer anderen Ergebnisaktion als ein Befehlswort von einem autorisierten Sprecher.

In einer vorteilhaften Ausführungsform ist es möglich das bestimmte Befehle unabhängig vom Sprecher ausgeführt werden. Hierdurch können beispielsweise Fahrzeugfunktionen gesteuert werden, die den Fahrer nicht beeinträchtigen. Als ein Beispiel bei einer Vorrichtung zur Sprachdialogführung kann hier eine Beheizung von Beifahrersitz und/oder Rückbank dienen, die auch durch andere Personen als den autorisierten Sprecher eingestellt werden kann. Vorteilhaft wird bei Eingabe solcher Befehle jedoch kein Sprachdialog geführt, d.h. das Sprachdialogsystem reagiert auf Befehle von nicht erkannten Sprechern zur Steuerung von unbedenklichen Fahrzeugfunktionen als reine Sprachsteuerung ohne Sprachausgabe. Auch bei einer Vorrichtung zur Sprachdialogaktivierung können vom Sprecher unabhängige Befehlswörter eingerichtet werden. So ist beispielsweise eine Aktivierung möglich, derart, dass einem durch die Befehlsauswerteeinheit erzeugten Aktivierungssignal entnehmbar ist, dass ein Passagierzugriff mit verringerten Funktionsumfang erwünscht ist. Bei einem solchen Passagierzugriff erfolgt beispielsweise eine Aktivierung als reine Sprachsteuerung, die keinerlei akustische Rückmeldung ausgibt und die lediglich zum Ausführen von Steuerbefehlen von unbedenklichen Fahrzeugfunktionen ausgebildet ist.

In einer weiteren vorteilhaften Ausführungsform ist die Vorrichtung als kombinierte Vorrichtung zur Sprachdialogaktivierung und -führung ausgebildet. D.h. im nicht aktivierten Zustand dient die Vorrichtung zur Sprachdialogaktivierung. Wurde die Vorrichtung durch ein Schlüsselwort durch einen autorisierten Sprecher aktiviert, arbeitet sie als Vorrichtung zur Sprachdialogführung.

Insbesondere bei einer derartigen Ausbildung als kombiniertes System ist es möglich, mehrere verschiedene Schlüsselwörter zu definieren. Durch ein erstes Schlüsselwort kann die Vorrichtung derart durch den autorisierten Sprecher aktiviert werden, dass Sie ausschließlich nachfolgende weitere Befehle des autorisierten Sprechers ausführt. Außerdem kann ein zweites Schlüsselwort konfiguriert werden, was die Vorrichtung in einen Zustand versetzt, in dem sie Befehle von beliebigen Sprechern ausführt. Vorteilhaft haben jedoch Befehle des autorisierten Sprechers eine höhere Priorität, d.h. ein Befehl des autorisierten Sprechers kann nicht durch einen nachfolgenden Befehl einer anderen Person unterbrochen werden, kann jedoch selbst die Ausführung eines Befehls von einer anderen Person unterbrechen.

In einer vorteilhaften Ausführungsform weist die Spracherkennungseinheit eine Worterkennungseinheit und eine nachfolgende Strukturerkennungseinheit auf. Die Worterkennungseinheit ist zum Erkennen von Wörtern aus dem Sprachsignal ausgebildet, derart, dass Sprachmerkmale aus dem Sprachsignal extrahiert und mit gespeicherten Sprachmerkmalen verglichen werden. Die Strukturerkennungseinheit überprüft derart durch die Worterkennungseinheit erkannte Wortfolgen daraufhin, ob diese eine einen Befehl enthaltenden Struktur beinhaltet.

Vorteilhaft weist die Vorrichtung eine der Sprechererkennungseinheit und/oder der Befehlsworterkennungseinheit vorgeschaltete Echokompensationseinheit auf. Diese weist mindestens einen Eingang für ein mono-, stereo- und/oder Mehrkanallautsprechersignal auf. Hierdurch kann ein Einfluss eines Lautsprechersignals auf das Sprachsignal kompensiert werden, indem ein durch das Lautsprechersignal erzeugtes Teilsignal berechnet bzw. abgeschätzt und von dem Sprachsignal subtrahiert wird.

Außerdem kann die Echokompensationseinheit eine Untereinheit zur Kompensation von durch weitere Personen erzeugten Sprachanteilen beinhalten. Diese weist vorteilhaft mindestens einen zusätzlichen Mikrofoneingang auf. Die Untereinheit kann dazu ausgebildet sein, den Einfluss von, durch mit dem zusätzlichen Mikrofoneingang verbundene weitere Mikrofone aufgenommenen, Sprachanteilen von weiteren Personen zu kompensieren. D.h. die Untereinheit ist dazu ausgebildet, anhand eines Ausgabesignals der weiteren Mikrofone, einen Einfluss der Sprachanteile der weiteren Sprecher auf das Sprachsignal zu approximieren bzw. zu berechnen und diesen Einfluss durch Abziehen vom Sprachsignal zu kompensieren. Alternativ oder Zusätzlich zur Verwendung weiterer Mikrofone zur kompensation von Sprachanteilen weiterer Sprecher, kann die Untereinheit zu diesem Zweck auch zur Filterung des Sprachsignals synchron mit Stimmgrundfrequenzen ausgebildet sein

Alternativ oder zusätzlich kann im Fall, dass der Eingang für das Sprachsignal für Mehrkanal-Sprachsignale ausgebildet ist oder dass mehrere Mikrofoneingänge vorhanden sind, die Untereinheit dazu ausgebildet sein, anhand eines zuvor ermittelten, abgeschätzten oder vorgegebenen Orts des Sprechers eine zeitliche Korrelation der verschiedenen Sprachsignalkanäle durchzuführen. D.h., werden mehrere Mikrofone verwendet, werden alle Sprachsignalanteile aus dem Sprachsignal reduziert, die nicht vom erwarteten Ort des Sprechers stammen.

Die Echokompensationseinheit ist dazu ausgebildet das entsprechend bereinigte Sprachsignal an die Sprechererkennungseinheit und/oder Spracherkennungseinheit zu übermitteln.

Vorteilhaft beinhaltet die Vorrichtung außerdem eine Rauschunterdrückungseinheit, die insbesondere einer Echokompensation nachfolgend angeordnet sein kann.
Die Rauschunterdrückungseinheit ist dazu ausgebildet stationäre und vorteilhaft auch quasistationäre, d.h. langsam zeitlich veränderliche, Rauschanteile zu unterdrücken.

Vorteilhaft ist die Rauschunterdrückungseinheit zur parametrisierten Anpassung einer Rauschverhaltenscharakteristik des Sprachsignals durch Frequenzgangadaption, insbesondere derart, dass die Rauschattribute des Sprachsignals den Rauschattributen eines in der Spracherkennungseinheit integrierten Sprachmodells angepasst werden, ausgebildet.

Durch eine derartige Anpassung der Rauschattribute wird sichergestellt, dass durch die Rauschunterdrückung keine Inkompatibilitäten des durch die Rauschunterdrückung bearbeiteten Sprachsignals mit den Sprachmodellen der Spracherkennungseinheit hervorgerufen werden.

Vorteilhaft sind die Sprechererkennungseinheit und/oder die Spracherkennungseinheit zur Synchronisierung einer Ausgabe von erkannten Sprechern an die Entscheidereinheit mit einer Ausgabe von erkannten Befehlen durch die Spracherkennungseinheit ausgebildet. Durch die Synchronisierung wird sichergestellt, dass eine Aktivierung einer Ergebnisaktion zuverlässig davon abhängt ob in einem gleichen Abschnitt des Sprachsignals ein Sprecher und ein Befehlswort erkannt wurden.

Vorteilhaft ist in die Sprechererkennungseinheit eine weitere Einheit integriert, die zur Sprecheradaption, d.h. zum stetigen Ermitteln von verfeinerten sprecherabhängigen Merkmalen und zum Speichern dieser verfeinerten sprecherabhängigen Merkmalen in das dem aktuellen Sprecher zugeordnete Sprecherprofil, ausgebildet ist. Durch diese weitere Einheit können vorteilhaft zeitlich bedingte Veränderungen als Attribute in das Sprecherprofil gespeichert werden.

Besonders vorteilhaft enthält auch die Spracherkennungseinheit eine zusätzliche Einheit zur Sprecheradaption. Hierdurch kann durch eine Anpassung der Spracherkennungseinheit an einen aktuellen Sprecher eine Zuverlässigkeit einer Erkennung von Befehlsworten signifikant erhöht werden.

Parallel zur Sprechererkennungseinheit und zur Spracherkennungseinheit ist vorteilhaft eine Fahrerzustandserfassungseinheit zur Erfassung des Zustands des Fahrers anhand des Sprachsignals angeordnet, die dazu ausgebildet ist anhand des Sprachsignals den Zustand des Fahrers zu erfassen und an die Entscheidereinheit auszugeben, wobei die Erfassung des Fahrerzustandes vorteilhafterweise mindestens Informationen über die Fahrtüchtigkeit (beispielsweise Müdigkeit, Drogen und/oder Überlastung) oder den emotionalen Zustand (beispielsweise aufgeregt, verärgert, konzentriert, entspannt und/oder beruhigt) ausgibt.

Vorteilhaft weist die Vorrichtung mindestens eine Speichervorrichtung zur Speicherung eines Benutzerprofils und/oder des mindestens einen Sprecherprofils auf. Diese kann als zentrale Speichereinheit ausgebildet sein, wobei Sprechererkennungs-, Spracherkennungs- und Entscheidereinheit mit der zentralen Speichereinheit verbunden sind. Alternativ weist die Vorrichtung mehrere Speichervorrichtungen auf, wobei jeweils mindestens eine in die Sprechererkennungseinheit, Spracherkennungseinheit und/oder Entscheidereinheit integriert ist.

Die mindestens eine Speichervorichtung weist vorteilhaft mindestens eine Schnittstelle zum Im- oder Exportieren von Daten auf, sodass Sprecher und/oder Benutzerprofile transferiert werden können. Dies ist insbesondere bei einem Wechsel des Fahrzeugs, beispielsweise wegen eines Neuwagenkaufs, vorteilhaft, da so eine komplett neue Einrichtung von Sprecher- und Benutzerprofilen vermieden werden kann.

In einer besonders vorteilhaften Ausführungsform ist die Vorrichtung derart ausgebildet, dass ein eingehendes Sprachsignal auch dann berücksichtigt wird, wenn eine Durchführung einer Ergebnisaktion durch die Entscheidereinheit erfolgt und dass durch einen im Sprachsignal enthaltenen Befehl die Durchführung einer Ergebnisaktion, welche durch einen vorherigen Befehls ausgelöst wurde, zumindest teilweise unterbrochen wird. Ein teilweises Unterbrechen kann darin bestehen, dass eine Sprachausgabe unterbrochen wird, während ein durch den vorherigen Befehl ausgelöstes Steuerereignis weiterhin durchgeführt wird. Somit ist es nicht notwendig, dass ein Sprecher eine Sprachausgabe vollständig abwartet. Hierdurch kann ein Sprachdialog erheblich beschleunigt werden, insbesondere wenn ein bereits mit der Vorrichtung vertrauter Sprecher durch ein Sprachausgabe mitgeteilte Auswahloptionen bereits kennt. Außerdem ist es vorteilhaft, dass eine Aufzählung möglicher Auswahloptionen unterbrochen werden kann, nachdem die vom Nutzer gewünschte Option vorgelesen wurde.

Weiterhin ist ein System zur Sprachdialogaktivierung und/oder Sprachdialogführung mit mindestens einem Lautsprecher, mindestens einem Mikrofon und einer erfindungsgemäßen Vorrichtung zur Sprachdialogaktivierung bzw. -führung vorteilhaft. Das mindestens eine Mikrofon weist vorteilhaft eine automatische Verstärkungsanpassung auf.

Das System kann zur Ausgabe von Mono-, Stereo- oder Mehrkanalaudiosignalen durch den mindestens einen Lautsprecher und zur Aufnahme von Mono-, Stereo- oder Mehrkanalsprachsignalen durch das mindestens eine Mikrofon ausgebildet sein. Außerdem kann es statt oder zusätzlich zu einzelnen Mikrofonen ein Mikrofonarray beinhalten.

Sind mehrere Mikrofone vorhanden, sind diese vorteilhaft derart angeordnet oder anordenbar, dass sich die Bereiche maximaler Empfindlichkeit der Mikrofone entsprechend deren Richtungscharakteristika in einem vermuteten oder ermittelten Aufenthaltsbereich eines autorisierten Sprechers überlappen, und eine nachgeschaltete Einheit zur Verarbeitung der Mikrofonsignale durch zeitverzögertes Aufsummieren der Signale sowie sonstige Signalverarbeitungsmaßnahmen die Signale der autorisierten Sprecher separiert, das Signal eines jeden autorisierten Sprechers in seinem Sprachkanal anhebt, und alle anderen Sprechersignale und Störsignale reduziert (sogenanntes "beam forming").

Vorteilhaft beinhaltet das System eine Nachführvorrichtung zur automatischen Ausrichtung der Mikrofone auf einen autorisierten Sprecher. Die Nachführvorrichtung kann derart ausgebildet sein, dass sie eine Laufzeitverzögerung der durch die Mikrofone aufgenommenen Signale auswertet um eine Position des autorisierten Sprechers zu ermitteln und dann die Mikrofone auf diese Position auszurichten.

Ausführungsbeispiele der Erfindung werden nachfolgend anhand der Fign. 1 bis 4 erläutert. Es zeigen:
Figur 1 Erste Ausführungsform eines erfindungsgemäßen Systems zur Sprachdialogaktivierung
Figur 2 erste Ausführungsform eines erfindungsgemäßen Systems zur Sprachdialogführung
Figur 3 zweite Ausführungsform eines erfindungsgemäßen Systems zur Sprachdialogaktivierung
Figur 4 zweite Ausführungsform eines erfindungsgemäßen Systems zur Sprachdialogführung

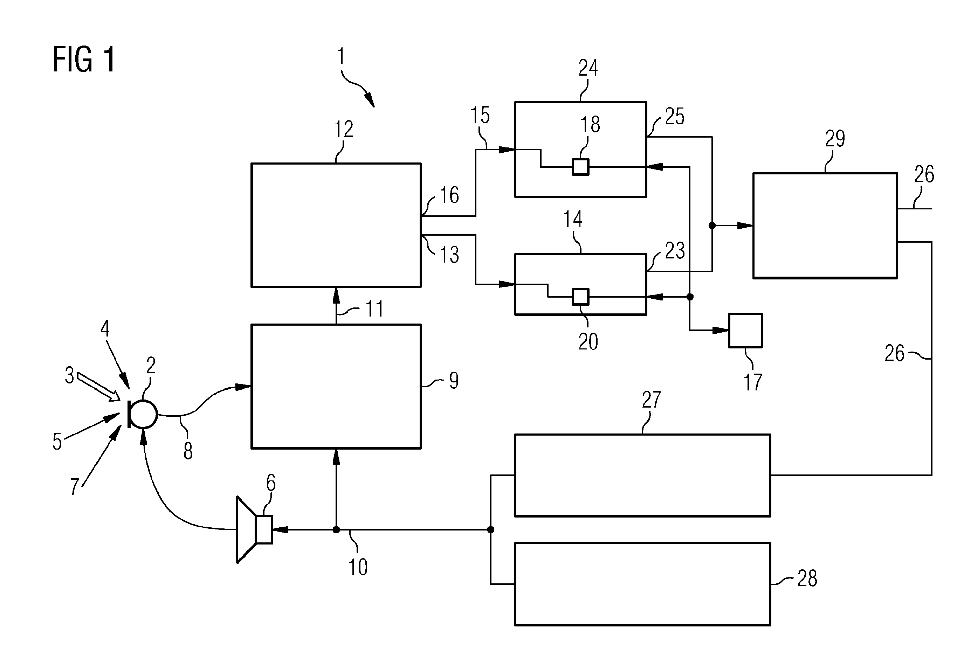

In Figur 1 ist ein System zur Sprachdialogaktivierung 1 gezeigt. Dieses wertet ein durch das Mikrofon 2 aufgenommenes Sprachsignal 8 aus. Das Sprachsignal besteht aus einer durch einen Nutzer durchgeführten akustischen Spracheingabe 3 sowie aus mehreren Störsignale, nämlich Sprachanteile anderen Personen im Kfz-Innenraum 4, Lärm vom Kfz-Umfeld 5, Musik aus einem Radio 28 und/oder Sprachausgabesignale aus einer Sprachdialogausgabe 27 durch Lautsprecher 6 und Schallreflexionen 7 der Spracheingabe und der Störsignale. Das Sprachsignal 8 wird in eine Echokompensationseinheit 9 eingegeben. Die Echokompensationseinheit 9 hat einen zusätzlichen Eingang für das Lautsprechersignal 10. Die Echokompensationseinheit berechnet mit dem Lautsprechersignal 10 den Einfluss des Störsignals 6 auf das Sprachsignal 8. Außerdem berechnet die Echokompensationseinheit die durch das Störsignal hervorgerufenen Anteile der Schallreflexionen 7 sowie deren Einfluss auf das Sprachsignal 8. Die somit bekannten Einflüsse werden von der Echokompensationseinheit kompensiert und das echokompensierte Sprachsignal 11 wird aus der Echokompensationseinheit 9 ausgegeben.

Das echokompensierte Sprachsignal 11 wird eingangsseitig in eine Rauschunterdrückungseinheit 12 gegeben und einer Rauschkompensation unterzogen. Hierdurch wird ein statischer Untergrund vom Signal 11 abgezogen. Außerdem werden quasistationäre, d.h. langsam veränderliche Rauschanteile kompensiert. Außerdem wird die Rauschverhaltenscharakteristik des Signals 11 parametrisch durch eine Frequenzgangadaption angepasst. Hierdurch werden die Rauschattribute des Signals 11 den Rauschattributen eines Sprachmodels der Schlüsselworterkennungseinheit ... angepasst.

Das derart rauschkompensierte Signal 15 wird durch einen ersten Ausgang 13 und einen zweiten Ausgang 16 ausgegeben.

Der erste Ausgang 13 ist mit der Sprechererkennungseinheit 14 verbunden. Die Sprechererkennungseinheit 14 ist dazu ausgebildet Sprechermerkmale aus dem Signal 15 zu extrahieren. Diese extrahierten Sprechermerkmale vergleicht sie nacheinander mit in Sprecherprofilen in einer Speichervorrichtung 17 gespeicherten Merkmalen, derart dass nacheinander jeweils ein Sprecherprofil aufgerufen wird und die darin gespeicherten Merkmale mit den extrahierten Merkmalen verglichen werden. Dies wird wiederholt, bis die extrahierten Merkmale mit allen gespeicherten Sprecherprofilen abgeglichen wurden. So wird festgestellt, ob die extrahierten Merkmale mit den Merkmalen aus einem der Sprecherprofile übereinstimmen.

Wird eine solche Übereinstimmung festgestellt, überträgt die Sprechererkennungseinheit die Information über den erkannten Sprecher durch den Ausgang 23 an die Sprachdialogaktivierungseinheit 29.

Außerdem ist in der Sprechererkennungseinheit 14 eine weitere Einheit 20 zur Sprecheradaption integriert, die zum stetigen Verfeinern der sprecherabhängigen Merkmale ausgebildet ist. Die verfeinerten sprecherabhängigen Merkmale speichert die weitere Einheit in das zum Sprecher gehörige auf der Speichervorrichtung 17 gespeicherte Sprecherprofil.

Die weitere Einheit 20 ist dazu ausgebildet, zeitlich bedingte Veränderungen der Sprecherinhaltsmerkmale zu bestimmen und als Attribute in das Sprecherprofil auf der Speichervorrichtung 17 zu speichern.

Parallel zur Sprechererkennungseinheit 14 ist eine Schlüsselworterkennungseinheit 24 angeordnet. Diese ist dazu ausgebildet, zu erkennen, ob bzw. welche gültigen Befehlswörter bzw. gültige Sprachbefehlsformen in dem Sprachsignal enthalten sind. Entsprechend ermittelte Befehle werden durch den Ausgang 25 ausgegeben.

Die Schlüsselworterkennungseinheit enthlält außerdem eine zusätzliche Einheit 18 zur Sprecheradaption. Diese ist dazu ausgebildet die Schlüsselworterkennung für einen aktuellen autorisierten Sprecher zu optimieren. Hierzu extrahiert die zusätzliche Einheit Sprachmerkmale aus dem Sprachsignal und vergleicht diese mit in dem Sprecherprofil gespeicherten individuellen Sprachmerkmalen. Die individuellen Sprachmerkmale werden abhängig vom Vergleichsergebnis verfeinert und/oder ergänzt. Hierdurch können zeitliche Veränderungen der Sprachmerkmale als Attribut erfasst und in das Sprecherprofil gespeichert werden. Die so ermittelten/ergänzten individuellen Sprachmerkmale können bei der Erkennung von Schlüsselworten berücksichtigt werden. Da so zur Schlüsselworterkennung verwendete Sprachmodelle an den aktuellen Sprecher angepasst werden können, kann die Zuverlässigkeit der Schlüsselworterkennung signifikant gesteigert werden.

Der Sprechererkennungseinheit 14 und der Schlüsselworterkennungseinheit 24 nachfolgend angeordnet ist die Sprachdialogaktivierungseinheit 29. Diese ist dazu ausgebildet, ein oder mehrere Ereignisse 26 auszugeben, wenn von der Schlüsselworterkennungseinheit 24 ein entsprechendes Befehlswort und zugleich von der Sprechererkennungseinheit ein zur Aktivierung berechtigter Sprecher erkannt wurde.

Eines der Ereignisse kann eine Sprachdialogausgabe 27 und ein weiteres Ereignis ein nicht dargestelltes Sprachdialogsystem aktivieren.

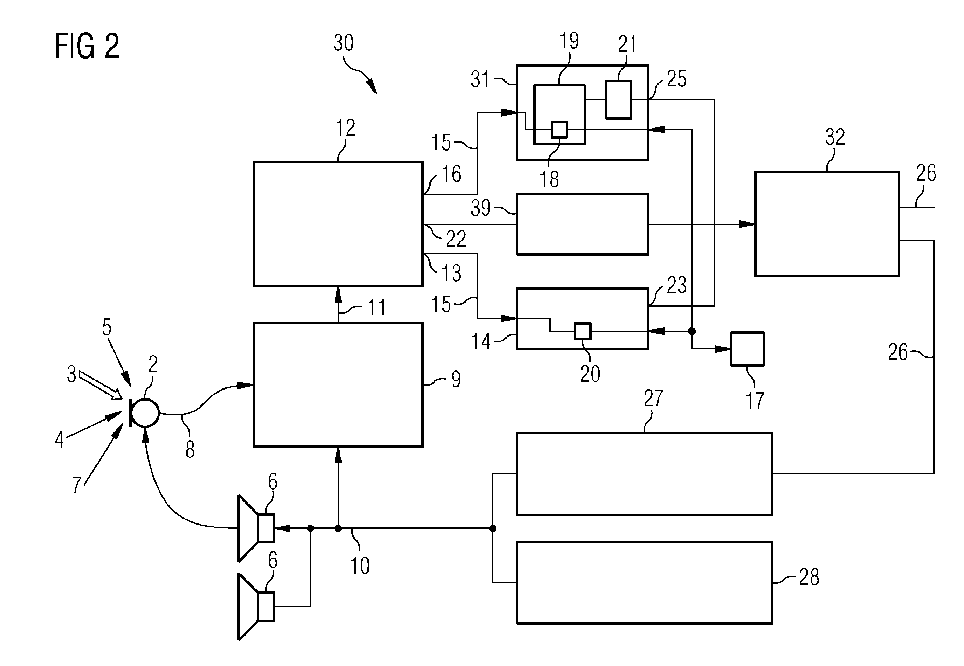

In Figur 2 ist ein Ausführungsbeispiel eines Systems zur Sprachdialogführung 30 gezeigt. Dieses weist anstatt der Schlüsselworterkennungseinheit 24 eine komplexere Spracherkennungseinheit 31 und anstatt der Sprachdialogaktivierungseinheit 29 eine Sprachdialogeinheit 32 auf.

Die Spracherkennungseinheit 31 unterscheidet sich von der Schlüsselworterkennungseinheit 24 aus dem ersten Ausführungsbeispiel im Wesentlichen dadurch, dass nicht nur einige Schlüsselwörter als gültig erkannt werden, sondern eine Vielzahl von verschiedenen Befehlen und dass nicht nur Worte an sich, sondern von den Worten gebildete Strukturen erkannt werden. Hierzu ist die Spracherkennungseinheit 31 in eine Worterkennungseinheit 19 zur Erkennung von Wörtern und eine Strukturerkennungseinheit 21 zur Erkennung von durch die Wörter gebildeten Strukturen unterteilt. Eine solche Unterteilung kann auch in Systemen zur Sprachdialogaktivierung vorteilhaft sein. Die zusätzliche Einheit 18 zur Sprecheradaption ist in der Worterkennungseinheit 19 integriert und erfüllt dort eine identische Funktion wie im ersten Ausführungsbeispiel

Einen entsprechend größeren Funktionsumfang weist auch die Sprachdialogeinheit 32 auf. Diese ist dazu ausgebildet, einen Sprachdialog mit dem autorisierten Sprecher zu führen, wobei der Sprachdialogablauf adaptiv vom autorisierten Sprecher gesteuert wird. Ein solcher Sprachdialogablauf kann beispielsweise durch das Auswählen verschiedener Optionen eines Menüs durch den Nutzer gesteuert werden. Nachdem ein Nutzer eine Option ausgewählt hat kann er beispielsweise in ein weiteres Menü mit weiteren Auswahloptionen gelangen. Zusätzlich zur Führung des Sprachdialogs ist die Sprachdialogeinheit 32 dazu ausgebildet auf Befehl des autorisierten Sprechers verschiedene Steuersignale für Fahrzeugfunktionen auszugeben.

Außer den vorgenannten Unterschieden zum ersten Ausführungsbeispiel unterscheidet sich das in Figur 2 gezeigte Ausführungsbeispiel darin, dass statt einem Lautsprecher 6 mehrere Lautsprecher 6 angeordnet sind. Diese sind jedoch wie im ersten Ausführungsbeispiel lediglich zur Ausgabe eines Monosignals ausgebildet.

Ein weiterer Unterschied zur vorherigen Ausführungsform besteht darin, dass die Rauschunterdrückungseinheit einen dritten Ausgang 22 aufweist. Dieser ist an eine Fahrerzustandserkennung 39 angeschlossen. Diese ist dazu ausgebildet einen Zustand des Fahrers, wie Heiserkeit, Müdigkeit, Alkoholisierung, Drogenkonsum oder Verärgerung zu erkennen.

Der erkannte Fahrerzustand wird an die Sprachdialogeinheit weitergeleitet. Diese ist dazu ausgebildet den Fahrerzustand hinsichtlich der Entscheidung über eine Ergebnisaktion zu berücksichtigen.

Ein zusätzlicher Unterschied zum Ausführungsbeispiel aus Figur 1 besteht darin, dass das System zum Barge-In ausgebildet ist, d.h. wird ein Befehl erkannt während noch eine Sprachausgabe aufgrund eines vorhergehenden Befehls erfolgt, wird diese unterbrochen.

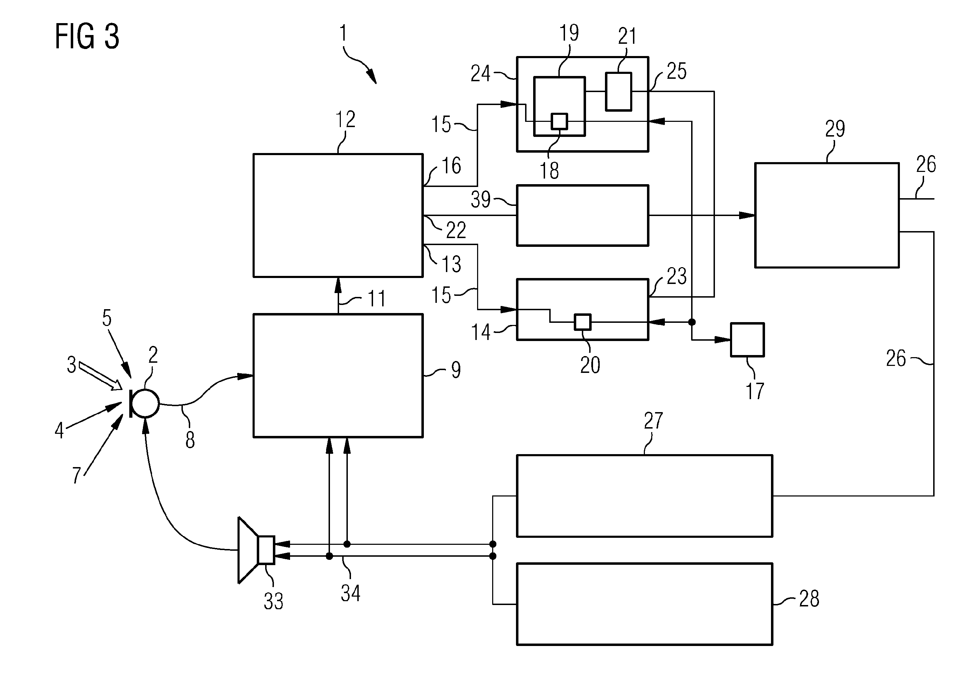

In Figur 3 ist ein zweites Ausführungsbeispiel eines Sprachdialogaktivierungssystem dargestellt. Dieses unterscheidet sich von dem in Figur 1 gezeigten Beispiel dadurch, dass statt einem Lautsprecher 6 eine Lautsprecherkombination 33 vorhanden ist. Diese ist zur Ausgabe von Mono-, Stereo- und Multikanalsignalen 34 ausgebildet. Entsprechend ist die Echokompensationseinheit zur Kompensation von Multikanalsignalen 34 ausgebildet. Außerdem beinhaltet das Sprachdialogaktivierungssystem genauso wie das in Figur 2 dargestellte Ausführungsbeispiel eine Fahrerzustandserkennung 39.

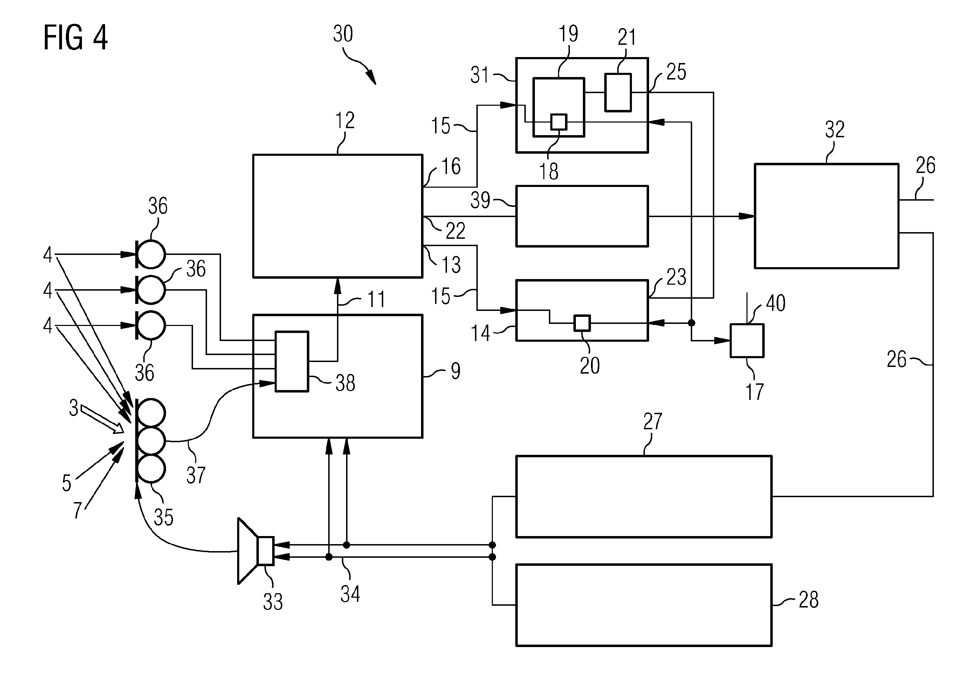

In Figur 4 ist ein zweites Ausführungsbeispiel eines Systems zur Sprachdialogführung gezeigt. In diesem sind statt einem einzelnen Mikrofon 2 ein Mikrofonarray 35 sowie einige weitere Mikrofone 36 verbaut. Das Mikrofonarray sowie die weiteren Mikrofone sind derart ausgebildet, dass sie eine Richtcharakteristik aufweisen, d.h. sie empfangen vorzugsweise Schall aus einem bestimmten Raumbereich. Durch das Mikrofonarray 35 wird ein Mehrkanalsprachsignal 37 aufgenommen, welches an statt des Sprachsignals 8 zur Echokompensationseinheit geleitet wird.

Des Weiteren wird auch hier eine Lautsprecherkombination zur Ausgabe von Mono-, Stereo und Mehrkanalsignalen verwendet.

Das Mikrofonarray 35 kann eine nicht dargestellte Mikrofonnachführvorrichtung beinhalten, welche die Mikrofone des Arrays dem autorisierten Sprecher automatisch nachführt. Hierzu wertet die Mikrofonnachführvorrichtung eine Laufzeitdifferenz des Sprachsignals zu den verschiedenen Mikrofonen des Arrays aus und bestimmt somit den Ort des autorisierten Sprechers.

Das durch das Mikrofonarray aufgenommene Sprachsignal wird vor der Eingabe in die Echokompensationseinheit in einer dem Mikrofonarray nachgeschaltete Einheit zur Verarbeitung der Mikrofonsignale durch zeitverzögertes Aufsummieren der Signale nachbearbeitet. Hierdurch werden die Signale der autorisierten Sprecher separiert und alle anderen Sprechersignale und Störsignale reduziert

Auf jeden weiteren Fahrzeugplatz ist eines der weiteren Mikrofone 36 ausgerichtet. Die Echokompensationseinheit beinhaltet eine Untereinheit 38, die dazu ausgebildet ist, den Einfluss der weiteren Personen im Kfz-Innenraum auf das Signal 37 anhand der Signale der weiteren Mikrofone 36 zu kompensieren. D.h. die Untereinheit berechnet anhand der Signale der weiteren Mikrofone 36 den vermutlichen Einfluss der weiteren Personen auf das Signal 37 und zieht diese Signalanteile entsprechend ab.

Außerdem wertet die Echokompensationseinheit die Laufzeitdifferenz der verschiedenen Kanäle des Mehrkanalsprachsignals 37 aus und entfernt alle Anteile des Signals 37, die entsprechend ihrer Laufzeitdifferenz nicht vom Ort des autorisierten Sprechers ausgehen.

Zusätzlich unterscheidet sich das in Figur 4 gezeigte Ausführungsbeispiel dadurch, dass die Speichervorrichtung 17 mit einem Ausgang 40 zur Anbindung eines USB-Ports, Kartenlesers oder optischen Laufwerks verbunden ist. Hierdurch wird ein Importieren und/oder Exportieren von Benutzerprofilen möglich.

Selbstverständlich ist die Wahl von Lautsprechern und Mikrofonen unabhängig davon, ob ein System zur Sprachdialogführung oder Sprachdialogaktivierung vorliegt, d.h. auch Systeme zur Sprachdialogaktivierung mit Lautsprecher/Mikrofonanordnungen entsprechend den Figuren 2 oder 4 oder Systeme zur Sprachdialogführung mit Lautsprecher/Mikrofonanordnungen entsprechend den Figuren 1 oder 3 sind vorteilhaft.

## Patentansprüche

1. Vorrichtung zur Sprachdialogaktivierung und/oder Sprachdialogführung (1; 30) insbesondere zum Einsatz in Fahrzeuginnenräumen, mit
- mindestens einem Eingang für ein Sprachsignal (8; 37),
- einer Spracherkennungseinheit (24; 31) zur Feststellung ob und welche Befehlswörter in einem eingehenden Sprachsignal enthalten sind und
- einer eingangsseitig mit einem Ausgang der Spracherkennungseinheit verbundenen Entscheidereinheit (29; 32), die zum Durchführen einer Ergebnisaktion (26) abhängig von einem im Sprachsignal (8; 37) erkannten Befehlswort geeignet ist,
**dadurch gekennzeichnet, dass**
- die Vorrichtung zusätzlich eine Sprechererkennungseinheit (14) umfasst,
- die zum Bestimmen des aktuellen Sprechers anhand des Sprachsignals und mindestens eines gespeicherten Sprecherprofils geeignet ist,
- wobei die Entscheidereinheit zusätzlich eingangsseitig mit der Sprechererkennungseinheit verbunden ist und derart ausgebildet ist, dass die Aktivierung einer von dem Befehlswort abhängigen Ergebnisaktion (26) zumindest bei einigen Befehlswörtern davon abhängt, ob das Befehlswort als von einem dem Sprecherprofil zugeordneten Sprecher stammend identifiziert wurde.

2. Vorrichtung nach Anspruch 1, **dadurch gekennzeichnet, dass** die Entscheidereinheit (29; 32) zum Abgleichen und Korrelieren von Ergebnissen der Sprechererkennungseinheit (14) und der Spracherkennungseinheit (24; 31) mit zuvor in einem Benutzerprofil abgespeicherten sprecherspezifischen Informationen ausgebildet ist, wobei eine Durchführung mindestens einer befehlswortabhängigen Ergebnisaktion unterdrückt wird, wenn der aktuelle Sprecher für die Ausführung der Ergebnisaktionen nicht autorisiert ist.

3. Vorrichtung nach Anspruch 1 oder 2, **dadurch gekennzeichnet, dass** die Entscheidereinheit (29; 32) derart ausgebildet ist, dass einige Befehlswörter unabhängig von der Erkennung eines dem Sprecherprofil zugeordneten Sprechers ausgeführt werden.

4. Vorrichtung nach einem der Ansprüche 1 bis 3, **dadurch gekennzeichnet, dass** diese als kombinierte Vorrichtung zur Sprachdialogführung und -aktivierung ausgebildet ist.

5. Vorrichtung nach einem der Ansprüche 1 bis 4, **dadurch gekennzeichnet, dass** die Sprachauswerteeinheit (24; 31) eine Worterkennungseinheit (19) zur Erkennung von Wörtern sowie eine nachfolgende Strukturauswerteeinheit (21) zur Erkennung von Befehlen bildenden Strukturen beinhaltet.

6. Vorrichtung nach einem der Ansprüche 1 bis 5, **dadurch gekennzeichnet, dass** der Sprechererkennungseinheit (14) und/oder der Spracherkennungseinheit (24; 31) direkt oder indirekt eine Echokompensationseinheit (9) vorgeschaltet ist, wobei die Echokompensationseinheit (9) ein oder mehrere Eingänge für Lautsprechersignale (10; 34), insbesondere für die Behandlung von Mono-, Stereo- und/oder Multikanal-Lautsprechersignalen (10; 34) aufweist und zur Kompensation des Einflusses der Lautsprechersignale (10; 34) auf das Sprachsignal (8; 37) ausgebildet ist.

7. Vorrichtung nach Anspruch 6, **dadurch gekennzeichnet, dass** die Echokompensationseinheit (9) eine Untereinheit (38) zur Kompensation von Sprachanteilen von weiteren Personen aufweist, die vorteilhaft mit mindestens einem Eingang zum Anschluss von zusätzlichen Mikrofonen (36) verbunden ist.

8. Vorrichtung nach einem der vorherigen Ansprüche, **dadurch gekennzeichnet, dass** der Sprechererkennungseinheit (14) und/oder der Spracherkennungseinheit (24; 31) direkt oder indirekt eine Rauschunterdrückungseinheit (12) vorgeschaltet ist.

9. Vorrichtung nach einem der Ansprüche 1 bis 8, **dadurch gekennzeichnet, dass** die Sprechererkennungseinheit (14) und/oder die Spracherkennungseinheit (24; 31) zur Synchronisierung einer Ausgabe eines durch die Sprechererkennungseinheit (14) erkannten Sprechers an die Entscheidereinheit (29; 32) mit einer Ausgabe von durch die Spracherkennungseinheit (24; 31) erkannten Befehlsworten ausgebildet ist.

10. Vorrichtung nach einem der Ansprüche diesen 1 bis 9, **dadurch gekennzeichnet, dass** die Sprechererkennungseinheit (14) zum Identifizieren des aktuellen Sprechers durch Extrahieren von Sprechermerkmalen aus dem Sprachsignal und Vergleichen der Sprechermerkmale mit gespeicherten sprecherabhängigen Merkmalen ausgebildet ist und vorteilhaft eine weitere Einheit (20) umfasst, die zur Sprecheradaption, d.h. zum stetigen Ermitteln von verfeinerten sprecherabhängigen Merkmalen und Speichern der verfeinerten sprecherabhängigen Merkmale in die gespeicherten Sprecherprofile, ausgebildet ist

11. Vorrichtung nach einem der Ansprüche 1 bis 10, **dadurch gekennzeichnet, dass** parallel zur Sprechererkennungseinheit (14) und zur Spracherkennungseinheit (24; 31) eine Fahrerzustandserfassungseinheit (39) zur Erfassung des Zustands des Fahrers anhand des Sprachsignals (8; 37) angeordnet ist.

12. Vorrichtung nach einem der Ansprüche 1 bis 11, **dadurch gekennzeichnet, dass** die Spracherkennungseinheit eine zusätzliche Einheit (18) umfasst, die dazu ausgebildet ist zeitlich bedingte Veränderungen der Sprechermerkmale eines Sprechers als Attribut zu Erfassen und in ein dem Sprecher zugeordnetes gespeichertes Sprecherprofil zu speichern.

13. Vorrichtung nach einem der Ansprüche 1 bis 12, **dadurch gekennzeichnet, dass** die Vorrichtung mindestens eine Speichervorrichtung (17) aufweist, die insbesondere zur Speicherung von Benutzerprofilen und/oder Sprecherprofilen ausgebildet sein kann.

14. Vorrichtung nach Anspruch 13, **dadurch gekennzeichnet, dass** die mindestens eine Speichervorrichtung (17) einen Ein-und/oder Ausgang zum Exportieren und/oder importieren von gespeicherten Sprecherprofilen und/oder Benutzerprofilen aufweist.

15. Vorrichtung nach einem der vorherigen Ansprüche, **dadurch gekennzeichnet, dass** die Vorrichtung derart ausgebildet ist, dass sie zur Auswertung von Sprachsignalen (8; 37) auch während der Durchführung einer Ergebnisaktion (26) aktiviert ist, insbesondere derart, dass bei Erkennung eines von einem autorisierten Sprecher stammenden Befehls die Ausführung einer durch einen vorherigen Befehl ausgelösten Ergebnisaktion (26) zumindest teilweise unterbrochen wird.

16. System zur Sprachdialogaktivierung und/oder Sprachdialogführung mit einer Vorrichtung nach einem der Ansprüche 1 bis 15, mindestens einem Mikrofon (2; 35)und mindestens einem Lautsprecher (6; 33).

17. System nach Anspruch 16, **dadurch gekennzeichnet, dass** das System mehrere Mikrofone (2) oder mindestens ein Mikrofonarray (25) beinhaltet, die derart angeordnet sind, dass sich Bereiche optimalen Empfangs, die durch Richtungscharakteristika der Mikrofone gegeben sind, zumindest einiger der Mikrofone (2; 35) im vermuteten Aufenthaltsbereich von autorisierten Sprechern überlappen.

18. System nach Anspruch 17, **dadurch gekennzeichnet, dass** die Mikrofone zum automatischen Ausrichten auf eine durch die Mikrofone erfasste Position der Sprechers ausgebildet sind.

19. Verfahren zur Sprachdialogaktivierung und/oder -führung mit den Schritten
- Aufnehmen eines Sprachsignals (8; 37)
- Erkennen eines Befehlswortes oder einer Befehlswortstruktur aus dem Sprachsignal (8; 37)
- Erkennen eines Sprechers anhand des Sprachsignals (8; 37) und mindestens eines gespeicherten Sprecherprofils
- nachfolgende Durchführung einer Ergebnisaktion (26) abhängig von einem erkannten Befehlswort und einem erkannten Sprecher.

20. Verfahren nach Anspruch 19, **dadurch gekennzeichnet, dass** der Schritt Erkennen eines Befehlswortes oder einer Befehlswortstruktur die Teilschritte
- Erkennen von im Sprachsignal enthaltenen Wörtern
- Erkennen von durch die Wörter gebildete Befehlsstrukturen enthält.

21. Verfahren nach Anspruch 19 oder 20, **dadurch gekennzeichnet, dass** vor dem Erkennen eines Befehlswortes und/oder vor dem Erkennen eines Sprechers eine Echokompensation durchgeführt wird, derart dass durch Reflexionen im Fahrgastraum erzeugte Überlagerungen des Lautsprechersignals aus dem Sprachsignal entfernt werden, indem die durch das Lautsprechersignal erzeugten Überlagerungen berechnet und von dem Sprachsignal subtrahiert werden.

22. Verfahren nach Anspruch 21, **dadurch gekennzeichnet, dass** durch weitere Personen hervorgerufene Sprachsignalanteile (4) des Sprachsignals (8; 37) bestimmt und zumindest teilweise aus dem Sprachsignal (8; 37) entfernt werden.

23. Verfahren nach einem der Ansprüche 19 bis 22 **dadurch gekennzeichnet, dass** das Sprachsignal (8; 37) als MehrkanalSprachsignal (37) ausgebildet ist.

24. Verfahren nach Anspruch 23, **dadurch gekennzeichnet, dass** durch eine zeitliche Korrelation von unterschiedlich zeitverschobenen Signalen von unterschiedlichen Kanälen des Mehrkanal-Sprachsignals (37), die Anteile des Sprachsignals (8; 37) extrahiert und separiert werden, die von einem der Orte von autorisierten Sprechern stammen.

25. Verfahren nach einem der Ansprüche 19 bis 24, **dadurch gekennzeichnet, dass** eine Abhängigkeit der Durchführung einer Ergebnisaktion von einem erkannten Befehlswort und einem erkannten Sprecher darin besteht, dass ein Durchführen der Ergebnisaktion (26) unterdrückt wird, wenn der zugehörige Sprecher nicht erkannt wurde oder nicht zur Anweisung der Ergebnisaktion autorisiert ist.

26. Verfahren nach einem der Ansprüche 19 bis 25, **dadurch gekennzeichnet, dass** vor dem Erkennen eines Befehlswortes oder eines Sprechers eine Rauschunterdrückung durchgeführt wird.

27. Verfahren nach einem der Ansprüche 19 bis 26, **dadurch gekennzeichnet, dass** zum Erkennen eines autorisierten Sprechers Sprechermerkmale aus dem Sprachsignal (8; 37) extrahiert und mit in einem Sprecherprofil gespeicherten individuellen Sprechermerkmalen abgeglichen werden.

28. Verfahren nach Anspruch 27, **dadurch gekennzeichnet, dass** eine Sprecheradaption durchgeführt wird, durch die kontinuierlich die im Sprecherprofil gespeicherten individuellen Sprechermerkmalen verfeinert und ergänzt werden.

29. Verfahren nach einem der Ansprüche 19 bis 28, **dadurch gekennzeichnet, dass** zeitlich bedingte Veränderungen der Sprechermerkmale als Attribut erfasst und in das Sprecherprofil gespeichert werden.

30. Verfahren nach einem der Ansprüche 19 bis 30, **dadurch gekennzeichnet, dass** zum Erkennen von Befehlsworten Sprachmerkmale aus dem Sprachsignal (8; 37) extrahiert und mit in einem Sprecherprofil gespeicherten individuellen Sprachmerkmalen abgeglichen werden.

31. Verfahren nach Anspruch 30, **dadurch gekennzeichnet, dass** eine Sprecheradaption durchgeführt wird, durch die kontinuierlich die im Sprecherprofil gespeicherten individuellen Sprachmerkmale verfeinert und ergänzt werden.

32. Verfahren nach einem der Ansprüche 19 bis 31, **dadurch gekennzeichnet, dass** zeitlich bedingte Veränderungen der Sprachmerkmale als Attribut erfasst und in das Sprecherprofil gespeichert werden.

33. Verfahren nach einem der Ansprüche 19 bis 32, **dadurch gekennzeichnet, dass** anhand des Sprachsignals (8; 37) ein Fahrerzustand erfasst wird.

34. Verfahren nach einem der Ansprüche 19 bis 33, **dadurch gekennzeichnet, dass** die nachfolgende Durchführung der Ergebnisaktion durch eine Eingabe eines weiteren Sprachsignals, enthaltend ein weiteres Befehlswort von einem autorisierten Sprecher, unterbrechbar ist.

35. Verfahren nach einem der Ansprüche 19 bis 34, **dadurch gekennzeichnet, dass** das anhand des Sprachsignals die Orte der autorisierten Sprecher ermittelt werden und dass unabhängig von einem im Sprachsignal enthaltenen Befehlswort ein Steuersignal zur Ausrichtung von mindestens einem Mikrofon auf die Orte der autorisierten Sprecher erzeugt werden.

36. Verfahren nach einem der Ansprüche 19 bis 35, **dadurch gekennzeichnet, dass** die Durchführung der Ergebnisaktion eine Ausgabe eines Sprachdialogsignals beinhaltet.

37. Verfahren nach einem der Ansprüche 19 bis 36, **dadurch gekennzeichnet, dass** die Durchführung der Ergebnisaktion (26) eine Signalausgabe eines Steuersignals zur Steuerung einer Funktion einer in einem Fahrzeug integrierten Vorrichtung beinhaltet.
